# EUROPÄISCHE PATENTSCHRIFT

(11) **EP 2 931 550 B1**
(45) Veröffentlichungstag und Bekanntmachung des Hinweises auf die Patenterteilung: **08.08.2018**
(21) Anmeldenummer: 13783022.0
(22) Anmeldetag: 21.10.2013
(51) Int. Cl.: B60L 11/00, B62M 6/50, B60L 3/12, G01B 21/22, G01G 19/02, G01L 5/00

(54) **VERFAHREN UND VORRICHTUNG ZUR GESAMTMASSEBESTIMMUNG EINES ELEKTRISCH ANTREIBBAREN FAHRZEUGS**
METHOD AND DEVICE FOR DETERMINING THE TOTAL MASS OF AN ELECTRICALLY DRIVABLE VEHICLE
PROCÉDÉ ET DISPOSITIF POUR DÉTERMINER LA MASSE TOTALE D'UN VÉHICULE À PROPULSION ÉLECTRIQUE

(30) Priorität: 12.12.2012 DE 102012222854
(43) Veröffentlichungstag der Anmeldung: 21.10.2015
(73) Patentinhaber: Robert Bosch GmbH, 70442 Stuttgart (DE)
(72) Erfinder: DASBACH, Gregor, 72762 Reutlingen (DE); KIMMICH, Peter, 71144 Steinenbronn (DE); SCHOCK, Wolfram, 72770 Ohmenhausen (DE); BAUMGAERTNER, Daniel, 72070 Tuebingen (DE)
(86) Internationale Anmeldenummer: PCT/EP2013/071919
(87) Internationale Veröffentlichungsnummer: WO 2014/090460

(56) Entgegenhaltungen:
- EP-A2- 1 236 640
- WO-A2-2008/095116
- DE-A1-102012 200 179
- US-A1- 2006 095 191

## Beschreibung

### Stand der Technik

Die vorliegende Erfindung betrifft Verfahren und Vorrichtungen zur Gesamtmassebestimmung eines elektrisch antreibbaren Fahrzeugs. Insbesondere betrifft die vorliegende Erfindung Verfahren und Vorrichtungen zur Gesamtmassebestimmung eines elektrisch antreibbaren Fahrrades, dessen Antrieb unter Berücksichtigung der Gesamtmasse ein Unterstützungsmoment für den Fahrer bereitstellen soll.
Aus der JP 11-334677 und aus der DE 10 2010 017 742 A1 sind Verfahren zur Modellbildung bekannt, bei welchen mittels einer Steigung, einer Geschwindigkeit, einem Motordrehmoment und einer Fahrerdrehzahl ein Drehmoment indirekt beobachtet werden kann. Zur Verwendung des gezeigten Modells ist jedoch eine Gesamtmasse des anzutreibenden Fahrzeugs festzustellen oder anzunehmen, wofür keine effiziente Methode bekannt ist.
Die WO 2008/095116 A2 offenbart ein elektrisch antreibbares Fahrzeug, welches zur Erhöhung der Betriebseffizienz imstande ist, auf Basis des zweiten newton'schen Gesetzes die Geschwindigkeit, die Steigfähigkeit sowie die Verbesserungsfähigkeit der maximalen Reisegeschwindigkeit zu bestimmen.
DE 10 2012 200 179 A1 hingegen offenbart eine Steuervorrichtung für ein Elektrofahrzeug, bei welchem unterhalb eines Fahrersitzes ein Sitzschalter angeordnet ist, der betätigt wird, wenn ein Fahrer sitzt und in diesem Fall ein Sitzsignal ausgibt.

### Offenbarung der Erfindung

Der vorstehend genannte Bedarf wird erfindungsgemäß gelöst durch ein Verfahren mit den Merkmalen gemäß Anspruch 1 sowie ein Verfahren mit den Merkmalen gemäß Anspruch 3. Des Weiteren wird der Bedarf durch ein elektrisch antreibbares Fahrzeug mit den Merkmalen gemäß Anspruch 8 gestillt. Entsprechend wird ein erstes Verfahren zur Gesamtmassebestimmung eines elektrisch antreibbaren Fahrzeugs vorgeschlagen, welches die Schritte umfasst: Bestimmen der Geschwindigkeit und einer durch das Fahrzeug befahrenen Steigung. Mit anderen Worten werden eine aktuelle Geschwindigkeit des Fahrzeugs und eine mit dieser Geschwindigkeit befahrene Steigung ermittelt.

Zusätzlich wird ein Antriebsmoment bei rein elektrisch angetriebenem Fahrzeug ermittelt. Beispielsweise kann dies durch Messung mittels eines Drehmomentsensors im Bereich des elektrischen Antriebsstranges eines elektrisch antreibbaren Fahrrades als Fahrzeug geschehen. Zusätzlich wird erfindungsgemäß die Gesamtmasse des Fahrzeugs auf Basis des zweiten Newton'schen Gesetzes aus der Geschwindigkeit, der befahrenen Steigung und dem Antriebsmoment des Elektromotors bestimmt.

Das durch den Fahrer aufgebrachte Antriebsmoment wird mittels Drehmomentsensoren und/oder eine Pedaldrehzahl mittels Drehzahlsensoren bestimmt und bei der Gesamtmassebestimmung berücksichtigt. Beispielsweise können Drehmomentsensoren im Bereich der Pedale verwendet werden, um per Muskelkraft generierte Drehmomente im Antriebsstrang des Fahrzeugs in der Formel für das zweite Newton'sche Gesetz zu berücksichtigen. Sofern Drehzahlsensoren an der Pedalerie des Fahrzeugs angebracht sind, kann überwacht werden, ob ein Anwender des Fahrzeugs die Pedale mit einer der Reisegeschwindigkeit entsprechenden Drehzahl betätigt. Sofern die Trittfrequenz so hoch ist, dass eine Auswirkung auf den Vortrieb des Fahrzeugs möglich ist (die Drehzahl also unter Berücksichtigung einer aktuellen Übersetzung mit der Raddrehzahl des Fahrzeugs übereinstimmt), so kann eine Gesamtmassebestimmung ausgesetzt werden, bis die Drehzahl der Pedale unterhalb der vorgenannten kritischen Drehzahl sind bzw. die Pedale stillstehen. Auf diese Weise können durch den Fahrer des Fahrzeugs eingebrachte Störgrößen bei der erfindungsgemäßen Gesamtmassebestimmung berücksichtigt werden.

Die Unteransprüche betreffen bevorzugte Weiterbildungen der Erfindung.

Weiter bevorzugt wird die Geschwindigkeitsänderung des Fahrzeugs ermittelt und bei der Bestimmung der Gesamtmasse verwendet. Mit anderen Worten wird die Masse des fahrenden Fahrzeugs (Fahrzeug nebst Fahrer und eventueller Zuladungsmasse) bestimmt, während die aktuelle Geschwindigkeitsänderung des Fahrzeugs berücksichtigt wird. Sofern eine Geschwindigkeitsänderung ermittelt worden ist, kann ein entsprechender Term "Masse mal Beschleunigung" in der Formel für das zweite Newton'sche Gesetz berücksichtigt werden. Eine Bestimmung der Gesamtfahrzeugmasse kann daher auch bei sich ändernder Geschwindigkeit schnell und exakt vorgenommen werden.

Gemäß einem weiteren Aspekt der vorliegenden Erfindung wird ein Verfahren zur Gesamtmassebestimmung eines elektrisch antreibbaren Fahrzeugs vorgeschlagen, welches die Schritte umfasst: Bestimmen einer Stauchung einer ersten Baugruppe des Fahrzeugs und Bestimmen der Gesamtmasse des Fahrzeugs auf Basis der bestimmten Stauchung unter Berücksichtigung einer aktuellen Verteilung durch einen Fahrer auf das Fahrzeug einwirkender Gewichtskräfte. Unter einer "Stauchung" sei im Rahmen der vorliegenden Erfindung eine durch Zuladung oder Besetzung des Fahrzeugs erfolgte Verkürzung eines Abstandes innerhalb einer ersten Baugruppe verstanden. Dabei kann die erste Baugruppe aufgrund einer Bauteil-inhärenten Elastizität oder durch eine zwischen zwei gegeneinander verschieblich gelagerten Bauteilen der Baugruppe hergestellte Verschieblichkeit erzielt werden. Dabei kann das Hook'sche Gesetz verwendet werden, indem über eine angenommene oder bekannte Steifigkeit bzw. Nachgiebigkeit innerhalb der ersten Baugruppe sowie über die Stauchung auf einen Anteil einer auf das Fahrzeug wirkenden Gewichtskraft innerhalb der Baugruppe geschlossen werden kann. Erfindungsgemäß wird dabei eine aktuelle Gewichtsverteilung durch die Zuladung und/oder die Besetzung des Fahrzeugs berücksichtigt. Diese kann beispielsweise aufgrund der Bauart des Fahrzeugs in Verbindung mit einem Neigungssensor ermittelt werden oder auf Basis in einem Speicherbauteil abgelegter Werte angenommen werden. Alternativ oder zusätzlich können auch Stauchungen einer zweiten Baugruppe des besetzten Fahrzeugs berücksichtigt werden, um auf eine aktuelle Gewichtsverteilung zu schließen. Dies bietet den Vorteil, dass eine exakte und dem Betriebszustand angemessene Gewichtskraft für die Gesamtmassebestimmung mit geringem oder gänzlich ohne zusätzlichen Materialaufwand ermittelt werden kann.

Weiter bevorzugt kann die Stauchung innerhalb der ersten Baugruppe und/oder innerhalb der zweiten Baugruppe in Verbindung mit einem ersten und einem zweiten gegeneinander verschieblich angeordneten Bauteil innerhalb des Fahrzeugs bestimmt werden. Diese Anordnung kann beispielsweise im Fahrwerk des Fahrzeugs angeordnet sein. Dabei ist eine Verschiebung des ersten und des zweiten Bauteils betriebsbedingt und/oder zuladungsbedingt (wobei eine Besetzung in diesem Sinne als "Zuladung" zu verstehen ist) vorgesehen. Beispielsweise kann eine Federung im Fahrwerk als Elastizität herangezogen werden, über welche die Stauchung zur Berechnung einer einwirkenden Gewichtskraft und anschließend zur Berechnung einer Gesamtmasse verwendet werden kann. Dies bietet den Vorteil, dass in Abhängigkeit der Zuladung erhebliche Verschiebungen zwischen den verschieblichen Bauteilen der Anordnung erfolgen, welche mittels Wegsensoren exakt aufnehmbar sind.

Beispielsweise kann die Stauchung bevorzugt mittels eines ersten Magnetfeldsensors an dem ersten Bauteil bestimmt werden, dessen Messsignal durch ein an dem zweiten Bauteil erzeugtes Magnetfeld beeinflusst wird. Hierzu kann beispielsweise das zweite Bauteil einen Permanentmagneten umfassen, dessen Magnetfeld durch den Magnetfeldsensor in Abhängigkeit der Stauchung in veränderlichem Maße erfasst wird. Auf diese Weise ist eine berührungslose und verschmutzungsunempfindliche Ermittlung der Stauchung gewährleistet.

Weiter bevorzugt kann das erste Bauteil an einer Sitzgelegenheit für den Fahrer und/oder an einer Lenkvorrichtung und/oder an einer Radaufhängung angeordnet sein. Dies bietet den Vorteil, dass eine gefederte Sitzgelegenheit bzw. ein gefedertes Fahrwerksteil einen von der Besetzung und/oder Beladung abhängigen Federweg aufweisen, der durch viele geeignete Wegsensoren gut auflösbar ist.

Weiter bevorzugt ist das zweite Bauteil von einem Rad des Fahrzeugs umfasst und das erste Bauteil ein gegenüber dem Rad feststehend am Fahrzeug angeordnetes Bauteil. Im Falle einer gefederten Aufhängung des Rades ist daher von einer erheblichen Stauchung des Federweges in Abhängigkeit der Zuladung bzw. Besetzung des Fahrzeugs auszugehen.

Gemäß einem weiteren Aspekt der vorliegenden Erfindung wird ein elektrisch antreibbares Fahrzeug vorgeschlagen, welches einen elektrischen Antrieb, beispielsweise einen Elektromotor, eine Einrichtung zur Ermittlung der Geschwindigkeit des Fahrzeugs, wie beispielsweise einem Drehzahlsensor oder ein Satelliten-gestütztes Ortungssystem, und eine Einrichtung zur Ermittlung des durch den Fahrer aufgebrachten Antriebsmomentes umfasst. Letztere Einrichtung kann beispielsweise einen Kraftsensor in der Pedalerie des Fahrzeugs umfassen. Weiter umfasst das elektrisch antreibbare Fahrzeug eine Einrichtung zur Ermittlung einer durch das Fahrzeug befahrenen Steigung, welche beispielsweise einen als Neigungssensor betriebenen Beschleunigungssensor umfassen kann. Des Weiteren ist eine Einrichtung zur Ermittlung eines durch den elektrischen Antrieb erzeugten Antriebsmomentes vorgesehen. Dabei kann das Drehmoment direkt (beispielsweise unter Vermittlung eines Kraftsensors) oder indirekt (z.B. unter Vermittlung einer Leistungsaufnahme des elektrischen Antriebs) ermittelt werden. Zusätzlich weist das erfindungsgemäße elektrisch antreibbare Fahrzeug eine Auswerteeinheit auf und eine Einrichtung zur Ermittlung der Beschleunigung des Fahrzeugs. Die Beschleunigung des Fahrzeugs kann beispielsweise über Radsensoren oder Satelliten-gestützt erfolgen. Erfindungsgemäß ist die Auswerteeinheit eingerichtet, Signale der vorgenannten Einrichtungen auszuwerten und ein Verfahren gemäß einem der vorstehenden Ansprüche auszuführen. Auf diese Weise kann eine Gesamtmasse des Fahrzeugs ermittelt und bei der Betriebspunktbestimmung des Fahrzeugs verwendet werden. Beispielsweise kann eine Steigung gemessen und aus dieser eine Hangabtriebskraft des Fahrzeugs unter Verwendung der bestimmten Gesamtmasse des Fahrzeugs ermittelt werden. So kann der elektrische Antrieb im Einklang mit entsprechenden Vorgaben angesteuert werden.

Bevorzugt kann das erfindungsgemäß vorgeschlagene elektrisch antreibbare Fahrzeug weiter eine Eingabevorrichtung umfassen, welche eingerichtet ist, im Ansprechen auf eine Eingabe eines Anwenders die Auswerteeinheit zur Ausführung eines Verfahrens, wie es vorstehend im Detail beschrieben worden ist, zu veranlassen. Die Eingabevorrichtung kann dabei beispielsweise eine Tastatur und/oder eine berührungssensitive Oberfläche und/oder eine Spracherkennung und/oder eine Einrichtung zum Empfang elektronisch generierter Signale umfassen. Auf diese Weise kann entweder eine direkte Eingabe durch den Anwender des Fahrzeugs erfolgen oder eine Anbindung elektronischer mobiler Geräte, welche der Anwender bei sich führt, erfolgen. Diese können mit entsprechenden Befehlssätzen versehen sein, welche die elektronischen mobilen Geräte zum Aussenden von Steuersignalen zum Generieren einer Eingabe in die Auswerteeinheit veranlasst. Auf diese Weise ist es möglich, das vorstehend beschriebene Verfahren erst im Ansprechen auf einen Anwenderwunsch bzw. die Anwendereingabe auszuführen und somit eine unnötige Neubestimmung der Gesamtfahrzeugmasse von Algorithmen zur Betriebszustandserkennung zu vermeiden.

### Kurze Beschreibung der Zeichnungsfiguren

Nachfolgend werden Ausführungsbeispiele der Erfindung unter Bezugnahme auf die begleitenden Zeichnungen im Detail beschrieben. In den Zeichnungen ist:
- Figur 1: eine Prinzipskizze eines Ausführungsbeispiels für ein erfindungsgemäßes elektrisch antreibbares Fahrzeug;
- Figur 2: eine schematische Übersicht über Komponenten eines Ausführungsbeispiels für ein erfindungsgemäßes System; und
- Figur 3: ein Flussdiagramm, veranschaulichend Schritte eines Verfahrens gemäß einem Ausführungsbeispiel der vorliegenden Erfindung.

### Ausführungsformen der Erfindung

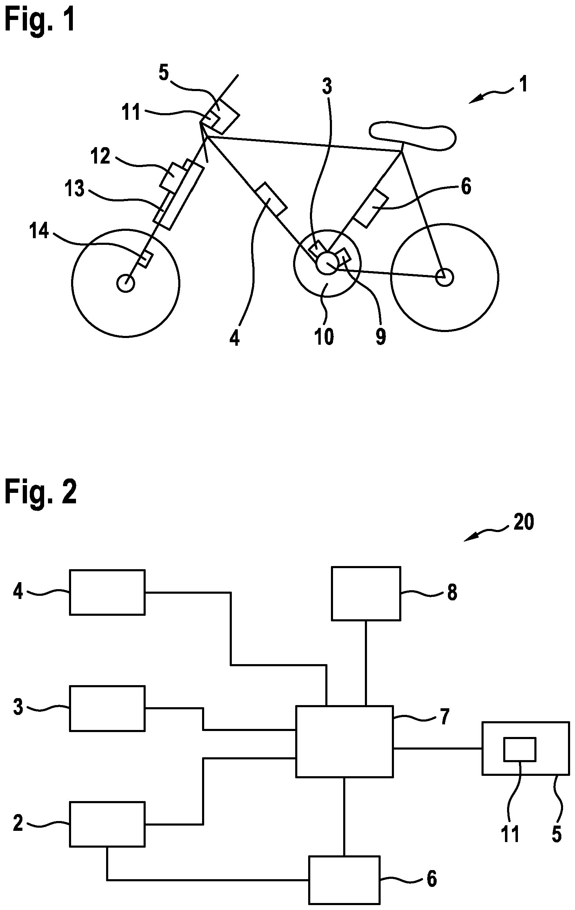

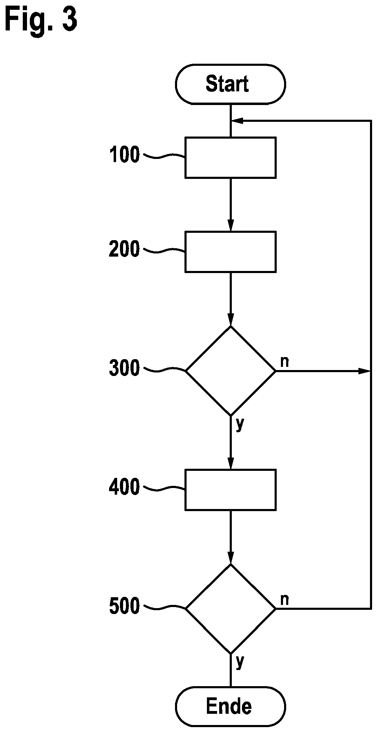

Figur 1 zeigt ein Fahrrad 1 als elektrisch antreibbares Fahrzeug. Für den Antrieb weist das Fahrrad 1 einen Akku 6 und einen Motor 10 auf. Im Bereich des Tretlagers ist weiter ein Drehmomentsensor 3 zur Ermittlung eines durch den Fahrer des Fahrrades 1 aufgebrachten Drehmomentes angeordnet. Zusätzlich ist ein Drehmomentsensor 9 zur Ermittlung eines durch den Motor 10 eingeleiteten Momentes vorgesehen. Ein Beschleunigungssensor 4 ist am Rahmen des Fahrrades 1 angeordnet, um einen Neigungswinkel des Fahrrades 1 gegenüber der Erdbeschleunigung zu erfassen. Im Bereich des Lenkers des Fahrrades 1 ist ein Bordcomputer 5 als Auswerteeinheit vorgesehen, welcher einen Prozessor 11 umfasst. Der Prozessor weist dabei (nicht dargestellten) Programmcode auf, welcher Anweisungen umfasst, wie sie zur Durchführung eines erfindungsgemäßen Verfahrens (in Verbindung mit Figur 3) erforderlich sind. Weiter weist das Fahrrad 1 eine Federgabel 13 auf, deren rahmenseitige Komponente einen Hall-Sensor 12 als Magnetfeldsensor aufweist. Der radseitig vorgesehene Teil der Federgabel 13 weist ein Magnetelement 14 auf, welches über die Federgabel 13 gegenüber dem Hall-Sensor 12 verschoben werden kann. Auf diese Weise wird eine Erkennung durch eine Zuladung bzw. Besetzung des Fahrrades 1 erfolgte Stauchung der Federgabel 13 mittels des Magnetelementes 14 und des Hall-Sensors 12 möglich.

Figur 2 zeigt eine schematische Übersicht über Komponenten eines Systems 20 zur Ausführung eines erfindungsgemäßen Verfahrens. Eine Motorsteuerung 7 als Auswerteeinheit ist mit einem Beschleunigungssensor 4 als Neigungssensor, einem Speicher 8, einem Drehmomentsensor 3 zur Ermittlung des über die Pedale eingeleiteten Drehmomentes, einem Elektromotor 2, einem Akku 6 zur Versorgung des Motors 2 mit elektrischer Energie und einem Bordcomputer 5, umfassend einen Prozessor 11, verbunden. Dabei kann entweder die Motorsteuerung 7 oder der Bordcomputer 5 (Mensch-Maschine-Interface (MMI)) bzw. deren Prozessor 11 als Auswerteeinheit im Sinne der vorliegenden Erfindung betrieben werden. Die Funktionsweise der dargestellten Komponenten ergibt sich wie in Verbindung mit der Vorstellung der erfindungsgemäßen Aspekte oben beschrieben.

Figur 3 zeigt ein Flussdiagramm, visualisierend Verfahrensschritte eines Verfahrens gemäß einem Ausführungsbeispiel der vorliegenden Erfindung. Das Verfahren beginnt ("Start") durch Eingabe eines Anwenders über den Bordcomputer 5. In Schritt 100 werden eine Geschwindigkeit und eine durch das Fahrzeug 1 befahrene Steigung ermittelt. Insbesondere wird die Geschwindigkeit während eines Befahrens der ermittelten Steigung ermittelt. In Schritt 200 wird das durch den Elektromotor 10 eingeleitete Drehmoment bestimmt, während über die Pedale des Fahrzeugs 1 kein Drehmoment durch den Fahrer eingeleitet wird. Sofern im Schritt 300 ermittelt wird, dass das Fahrermoment ungleich 0 Nm ist (N), fährt das Verfahren mit der Ermittlung von Geschwindigkeit und Steigung in Schritt 100 fort. Sobald das Fahrermoment 0 Nm ist (Y), wird in Schritt 400 auf Basis der ermittelten Größen nach dem zweiten Newton'schen Gesetz die Gesamtmasse des Fahrzeugs 1 bestimmt. In Schritt 500 wird ermittelt, ob eine vorbestimmte Abbruchbedingung erfüllt ist. Dabei kann die vordefinierte Abbruchbedingung beispielsweise eine Anwenderinteraktion sein oder ein Ausführen des Verfahrens beispielsweise auf Grundlage einer festgestellten Reisegeschwindigkeit von 0 km/h, abgebrochen werden. Ist die vorbestimmte Abbruchbedingung nicht erfüllt (N), fährt das Verfahren in Schritt 100 mit der Ermittlung von Geschwindigkeit und Steigung fort. Ist die vordefinierte Abbruchbedingung erfüllt (Y), endet das Verfahren ("Ende").

Erfindungsgemäß wird eine Ermittlung durch einen Fahrer und/oder eine Zuladung auf das Fahrzeug einwirkender Gewichtskräfte über eine Stauchung eines Teils oder einer Baugruppe des Fahrzeugs vorgeschlagen, wobei eine Vielzahl von Stauchstrecken am Fahrzeug identifiziert werden, ohne den Bereich der vorliegenden Erfindung hierdurch einzuschränken. Beispielsweise kann ein Magnetfeldsensor am Lenker, bevorzugt in einem Gehäuse, des Bordcomputers 5, vorgesehen sein. Als Magnetelement kann beispielsweise ein für die Ermittlung der Raddrehzahl im Rad angeordneter Permanentmagnet verwendet werden. Eine Messung der Geschwindigkeit bzw. der Geschwindigkeitsänderung kann erfindungsgemäß nach bekannten Verfahren (z.B. über einen Reedkontakt) und die Steigung, welche vom Fahrzeug befahren wird, ebenfalls über bekannte Verfahren (z.B. über Beschleunigungs- oder Drucksensoren) ermittelt werden. Selbiges gilt für das Motormoment, welches in der Regel entweder vom Fahrer oder durch ein zugeordnetes Kennfeld vorgegeben wird. Das Fahrerdrehmoment kann entweder über bekannte Drehmomentsensorik, z.B. in der Pedalerie des Fahrzeugs, ermittelt werden oder eine Einwirkung eines Fahrers dadurch ausgeschlossen werden, dass ein Drehzahlsensor in der Pedalerie eine Betätigung der Pedale durch den Anwender des Fahrzeugs unwahrscheinlich erscheinen lässt. Bevorzugt werden bei der erfindungsgemäßen Ermittlung der Gesamtmasse aus dem zweiten Newton'schen Gesetz (Bewegungsgleichung) ein Rollwiderstand und/oder ein Luftwiderstand in Abhängigkeit der ermittelten Reisegeschwindigkeit als feste Werte angenommen, aus Kennfeldern abgeleitet oder gänzlich vernachlässigt. Sofern eine Geschwindigkeitsänderung des Fahrzeugs ebenso wie eine Einleitung eines Drehmomentes seitens des Fahrers nicht erfolgt, ergibt sich die Hangabtriebskraft direkt aus dem Motordrehmoment und den für die Rollreibung und den Luftwiderstand angenommenen Größen. Selbstverständlich kann ein Geschwindigkeitssignal und/oder ein Geschwindigkeitsänderungssignal in Verbindung mit einer angenommenen oder ermittelten Gesamtmasse über einen Term für die Masse berücksichtigt werden.

Eine ermittelte Stauchung kann in Abhängigkeit des Fahrradtypus' und einer zugeordneten bekannten Gewichtskraftverteilung in eine Gesamtzuladungsmasse umgewandelt werden. Beispielsweise kann durch Versuche ermittelt werden, dass die Masse des Fahrers zu ca. 30% auf dem Lenker und zu ca. 70% auf dem Sattel eines Fahrrades lastet. Wird erfindungsgemäß nun beispielsweise eine Stauchung einer Federgabel (unterhalb des Lenkers) in Verbindung mit der Steifigkeit der Federgabel zu einer Gewichtskraft von beispielsweise 300 N ermittelt, so kann in einem Rechnungsmodell berücksichtigt werden, dass 70% der Zuladungsmasse über den Sattel in das Fahrzeug eingeleitet werden. Mit anderen Worten kann aufgrund der bekannten prozentualen Gewichtskraftverteilung errechnet werden, dass die Zuladungsmasse (Zuladung inklusive Fahrer) 1000 N beträgt.

Die Stauchung kann beispielsweise aus einer über eine vorbestimmte Zeitdauer gemessene Peakwertveränderung des Magnetfeldes in Abhängigkeit der Zuladung geschlossen werden und in Abhängigkeit eines in einem Speicherelement hinterlegten Kennfeldes eine einwirkende Gewichtskraft zugeordnet werden. Dabei ist es unerheblich, ob das Magnetfeld-erzeugende Element und das das Magnetfeld ermittelnde Elemente im Betrieb im Wesentlichen äquidistant zueinander angeordnet sind oder nur wiederkehrend einen vordefinierten Abstand zueinander einnehmen. Mit anderen Worten kann ein Vorderradnabenmotor einen Magnetfeldsensor in der Antriebseinheit aufweisen und ein zur Ermittlung der Stauchung der Federgabel verwendeter Magnet oberhalb der Feder (der "Stauchstrecke") an einem lenkerseitigen Bauteil des Fahrzeugs angeordnet sein. Entsprechendes gilt für ein Hinterradnabengetriebenes Fahrzeug und einen rahmenseitig angeordneten Permanentmagneten.

Selbstverständlich können die Kennfelder bzw. zuzuordnenden Zuladungsmassen entweder rechnerisch ermittelt und in Form von Formeln im System hinterlegt werden, alternativ oder zusätzlich kann auch eine Kalibrierung mit vordefinierten Test-Massen in einer Vielzahl vordefinierter Betriebszustände durchgeführt werden. Während der Fahrt kann dann auf diese Kalibrierung zurückgegriffen und je nach Stauchung zwischen den Kalibrierpunkten interpoliert werden. Selbstverständlich sind die beschriebenen Methoden und Vorrichtung miteinander kombinierbar. Eine geeignete Gewichtung der Ergebnisse ist dabei bevorzugt vorgesehen, um in Abhängigkeit beispielsweise eines Betriebszustandes den Einfluss besonders geeigneter Verfahren bzw. Stauchstrecken zu erhöhen und somit ein besonders exaktes und zuverlässiges Ergebnis zu erzielen.

Es ist ein Kerngedanke der vorliegenden Erfindung, Betriebszustandsüberwachungen eines elektrisch antreibbaren Fahrzeugs durch Verfahren zur Gesamtmassenbestimmung des Fahrzeugs zu verbessern. Gemäß einem Aspekt wird bei rein elektrisch angetriebenem Fahrzeug unter Berücksichtigung einer Steigung und einer Reisegeschwindigkeit des Fahrzeugs eine Gesamtmasse des Fahrzeugs auf Basis des zweiten Newton'schen Gesetzes ermittelt.

Alternativ oder zusätzlich kann eine Stauchungstrecke innerhalb einer Baugruppe des besetzten Fahrzeugs beispielsweise unter Zuhilfenahme eines Magnetelementes und eines Magnetfeldsensors vermessen werden und aus einer vordefinierten bzw. zuvor ermittelten Steifigkeit der Stauchstrecke über das Hook'sche Gesetz unter Berücksichtigung einer aktuellen Gewichtskraftverteilung auf die Gesamtmasse des Fahrzeugs geschlossen werden.

Auch wenn die erfindungsgemäßen Aspekte anhand der beigefügten Zeichnungsfiguren in Form von Ausführungsbeispielen im Detail beschrieben worden sind, bleiben Modifikationen, Kombinationen und Auslassungen der offenbarten Merkmale im Bereich der fachlichen Fähigkeiten Fachmanns, ohne den Bereich der vorliegenden Erfindung zu verlassen, deren Schutzbereich durch die beigefügten Ansprüche definiert ist.

## Patentansprüche

1. Verfahren zur Gesamtmassebestimmung eines elektrisch antreibbaren Fahrzeugs (1) wobei ein Teil des Antriebsmoments durch einen Fahrer aufgebracht wird, umfassend die Schritte:
- Bestimmen (100) der Geschwindigkeit und einer durch das Fahrzeug (1) befahrenen Steigung,
- Bestimmen (200) des Antriebsmomentes des Elektromotors bei rein elektrisch angetriebenem Fahrzeug (1),
- Bestimmen des durch den Fahrer aufgebrachten Antriebsmomentes mittels Drehmomentsensoren (9) und/oder Drehzahlsensoren, und
- Bestimmen (400) der Gesamtmasse des Fahrzeugs (1) auf Basis des zweiten Newton'schen Gesetzes in Abhängigkeit des bestimmten Antriebsmoments des Elektromotors, der befahrenen Steigung und der Geschwindigkeit
**dadurch gekennzeichnet, dass**
- das Bestimmen (400) der Gesamtmasse bei einem bestimmten Antriebsdrehmoment des Fahrers von 0 Nm erfolgt.

2. Verfahren nach Anspruch 1, wobei die Geschwindigkeitsänderung des Fahrzeugs (1) ermittelt und bei der Bestimmung der Gesamtmasse Verwendung findet.

3. Verfahren nach einem der vorhergehenden Ansprüche, **gekennzeichnet durch** die Schritte:
- Bestimmen einer Stauchung einer ersten Baugruppe des besetzten Fahrzeugs (1) und
- Bestimmen der Gesamtmasse des Fahrzeugs (1) auf Basis der bestimmten Stauchung unter Berücksichtigung einer aktuellen Verteilung auf das Fahrzeug (1) einwirkender Gewichtskräfte.

4. Verfahren nach Anspruch 3, wobei die Stauchung einer aus einem ersten Bauteil und einem zweiten gegeneinander verschieblichen Bauteil bestehenden Anordnung in einer Fahrwerkskomponente (13) des Fahrzeugs (1) bestimmt wird.

5. Verfahren nach Anspruch 4, wobei die Stauchung mittels eines Magnetfeldsensors (12) an dem ersten Bauteil bestimmt wird, dessen Messsignal durch ein an dem zweiten Bauteil erzeugtes Magnetfeld beeinflusst wird.

6. Verfahren nach Anspruch 5, wobei das erste Bauteil ein Bauteil einer Sitzgelegenheit für den Fahrer und/oder einer Lenkvorrichtung und/oder einer Radaufhängung ist.

7. Verfahren nach Anspruch 5 oder 6, wobei das zweite Bauteil ein Rad des Fahrzeugs (1) ist und das erste Bauteil ein gegenüber dem Rad feststehendes Bauteil des Fahrzeugs (1) ist.

8. Elektrisch antreibbares Fahrzeug (1) wobei ein Teil des Antriebsmoments durch einen Fahrer aufgebracht wird, umfassend
- einen elektrischen Antrieb (10)
- eine Einrichtung zur Ermittlung der Geschwindigkeit des Fahrzeugs (5),
- eine Einrichtung (3) zur Ermittlung des durch den Fahrer aufgebrachten Antriebsmomentes,
- eine Einrichtung zur Ermittlung der durch das Fahrzeug befahrenen Steigung (4),
- eine Einrichtung zur Ermittlung des durch den elektrischen Antrieb aufgebrachten Antriebsmomentes (9),
eine Auswerteeinheit (5, 7), und
- bevorzugt eine Einrichtung zur Ermittlung der Beschleunigung des Fahrzeugs (1), wobei die Auswerteeinheit (5, 7) bei einem bestimmten Antriebsdrehmoment des Fahrers von 0 Nm eingerichtet ist, Signale der vorgenannten Einrichtungen auszuwerten und ein Verfahren gemäß einem der vorstehenden Ansprüche auszuführen.

9. Elektrisch antreibbares Fahrzeug (1) nach Anspruch 8, weiter umfassend eine Eingabevorrichtung (5), welche eingerichtet ist, im Ansprechen auf eine Eingabe des Fahrers die Auswerteeinheit (5, 7) zur Ausführung eines Verfahrens nach einem der Ansprüche 1 bis 7 zu veranlassen.

## Claims

1. Method for determining the total mass of an electrically driveable vehicle (1), wherein a portion of the drive torque is applied by a rider, comprising the steps of:
- determining (100) the speed and a gradient of the route being travelled by the vehicle (1),
- determining (200) the drive torque of the electric motor in the case of a purely electrically driven vehicle (1),
- determining the drive torque, which is applied by the rider, by means of torque sensors (9) and/or rotation speed sensors, and
- determining (400) the total mass of the vehicle (1) on the basis of Newton's second law depending on the determined drive torque of the electric motor, the gradient of the route which is being travelled, and the speed,
**characterized in that**
- the process of determining (400) the total mass is performed at a determined drive torque of the rider of 0 Nm.

2. Method according to Claim 1, wherein the change in speed of the vehicle (1) ascertained and used for determining the total mass.

3. Method according to either of the preceding claims, **characterized by** the steps of:
- ; determining a compression of a first assembly of the occupied vehicle (1), and
- determining the total mass of the vehicle (1) on the basis of the determined compression, taking into account a current distribution of weight forces acting on the vehicle (1).

4. Method according to Claim 3, wherein the compression of an arrangement which is composed of a first structural part and a second structural part, which second structural part can be moved in relation to one another, is determined in a chassis component (13) of the vehicle (1).

5. Method according to Claim 4, wherein the compression is determined by means of a magnetic field sensor (12) at the first structural part, the measurement signal therefrom being influenced by a magnetic field which is generated at the second structural part.

6. Method according to Claim 5, wherein the first structural part is a structural part of a seating arrangement for the rider and/or of a steering apparatus and/or of a suspension arrangement.

7. Method according to Claim 5 or 6, wherein the second structural part is a wheel of the vehicle (1), and the first structural part is a structural part of the vehicle (1) which is fixed in relation to the wheel.

8. Electrically driveable vehicle (1), wherein a portion of the drive torque is applied by a rider, comprising
- an electric drive (10),
- a device for ascertaining the speed of the vehicle (5),
- a device (3) for ascertaining the drive torque which is applied by the rider,
- a device for ascertaining the gradient (4) of the route which is being travelled by the vehicle,
- a device for ascertaining the drive torque (9) which is applied by the electric drive,
- an evaluation unit (5, 7), and
- preferably a device for ascertaining the acceleration of the vehicle (1), wherein the evaluation unit (5, 7) is designed to evaluate signals from the abovementioned devices and to execute a method according to one of the preceding claims at a determined drive torque of the rider of 0 Nm.

9. Electrically driveable vehicle (1) according to Claim 8, further comprising an input apparatus (5) which is designed to prompt the evaluation unit (5, 7) to execute a method according to one of Claims 1 to 7 in response to an input by the rider.

## Revendications

1. Procédé pour déterminer la masse totale d'un véhicule (1) à propulsion électrique, dans lequel une partie du couple de propulsion est appliquée par un conducteur, comprenant les étapes consistant à :
- déterminer (100) la vitesse et une pente parcourue par le véhicule (1),
- déterminer (200) le couple de propulsion du moteur électrique lorsque le véhicule (1) est à propulsion uniquement électrique,
- déterminer le couple de propulsion appliqué par le conducteur au moyen de capteurs de couple (9) et/ou de capteurs de vitesse de rotation, et
- déterminer (400) la masse totale du véhicule (1) sur la base de la deuxième loi de Newton en fonction du couple de propulsion déterminé du moteur électrique, de la : pente parcourue déterminée et de la vitesse déterminée,
**caractérisé en ce que**
- la détermination (400) de la masse totale est effectuée lorsqu'il est déterminé que le couple de propulsion fourni par le conducteur est de 0 Nm.

2. Procédé selon la revendication 1, dans lequel la variation de vitesse du véhicule (1) déterminée et est utilisée lors de la détermination de la masse totale.

3. Procédé selon l'une quelconque des revendications précédentes, **caractérisé par** les étapes consistant à :
- déterminer un écrasement d'un premier module du véhicule (1) occupé et
- déterminer la masse totale du véhicule (1) sur la base de l'écrasement déterminé en tenant compte d'une répartition effective de forces pondérales agissant sur le véhicule (1).

4. Procédé selon la revendication 3, dans lequel l'écrasement d'un dispositif constitué d'un premier élément et d'un deuxième élément pouvant être déplacé par rapport l'un à l'autre dans un composant de châssis (13) du véhicule (1) est déterminé.

5. Procédé selon la revendication 4, dans lequel l'écrasement est déterminé au niveau du premier élément au moyen d'un capteur (12) dont le signal de mesure est soumis à l'effet d'un champ magnétique généré par le deuxième élément.

6. Procédé selon la revendication 5, dans lequel le ; premier élément est un élément d'un siège de conducteur destiné au conducteur et/ou d'un dispositif de direction et/ou d'une suspension de roue.

7. Procédé selon la revendication 5 ou 6, dans lequel le second élément est une roue du véhicule (1) et le premier élément est un élément du véhicule (1) qui est fixe par rapport à la roue.

8. Véhicule à propulsion électrique (1), dans lequel une partie du couple de propulsion est appliquée par un conducteur, comprenant :
- un dispositif de propulsion électrique (10),
- un dispositif destiné à déterminer la vitesse du véhicule (5),
- un dispositif (3) destiné à déterminer le couple de propulsion appliqué par le conducteur,
- un dispositif destiné à déterminer la pente (4) parcourue par le véhicule,
- un dispositif destiné à déterminer le couple de propulsion (9) appliqué par le dispositif de propulsion électrique,
une unité d'évaluation (5, 7), et
- de préférence, un dispositif destiné à déterminer l'accélération du véhicule (1), dans lequel l'unité d'évaluation (5, 7) est conçue pour évaluer, lorsqu'il est déterminé que le couple de propulsion appliqué par le conducteur est de 0 Nm, des signaux desdits dispositifs et pour mettre en oeuvre un procédé selon l'une des revendications précédentes.

9. Véhicule à propulsion électrique (1) selon la revendication 8, comprenant en outre un dispositif d'entrée (5) qui est conçu pour déclencher, en réponse à une entrée fournie par le conducteur, la mise en oeuvre par l'unité d'évaluation (5, 7) d'un procédé selon l'une des revendications 1 à 7.
